(19) Europäisches Patentamt
European Patent Office
Office européen des brevets

(11) **EP 3 824 741 B1**

(12) **EUROPEAN PATENT SPECIFICATION**

(45) Date of publication and mention
of the grant of the patent:
**27.07.2022  Bulletin 2022/30**

(21) Application number: **20752427.3**

(22) Date of filing: **10.01.2020**

(51) International Patent Classification (IPC):
**A23L 7/10** (2016.01)    **A23L 19/00** (2016.01)
**A23L 19/10** (2016.01)

(52) Cooperative Patent Classification (CPC):
**A23L 7/198; A23L 19/01; A23L 19/10**

(86) International application number:
**PCT/JP2020/000615**

(87) International publication number:
**WO 2020/162100 (13.08.2020 Gazette 2020/33)**

(54) **DRY PLANT POWDER HAVING ENHANCED SWEET FLAVOR, AND FOOD/DRINK**

TROCKENES PFLANZENPULVER MIT VERBESSERTEM SÜSSGESCHMACK UND
NAHRUNGSMITTEL/GETRÄNK

POUDRE DE PLANTE SÉCHÉE AUGMENTANT LE GOÛT SUCRÉ, ET ALIMENT AINSI QUE
BOISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.02.2019   JP 2019019921**
**19.07.2019   PCT/JP2019/028459**

(43) Date of publication of application:
**26.05.2021   Bulletin 2021/21**

(73) Proprietor: **Mizkan Holdings Co., Ltd.**
**Handa-shi, Aichi 475-8585 (JP)**

(72) Inventors:
• **KONISHI, Manabu**
**Handa-shi, Aichi 475-8585 (JP)**
• **IHARA, Junichiro**
**Handa-shi, Aichi 475-8585 (JP)**

(74) Representative: **Mewburn Ellis LLP**
**Aurora Building**
**Counterslip**
**Bristol BS1 6BX (GB)**

(56) References cited:
**JP-B2- S6 412 297     US-A1- 2008 182 006**

• **Kagawa Yoshiko: "Oatmeal, Japanese pumpkin fruit raw, western pumpkin fruit raw, cabbage head raw, sweet corn immature kernels raw, tomatoes fruit raw, beetroot, root raw, raspberry raw", Kagawa nutrition University publishing division, 1 April 2016 (2016-04-01), ISBN: 978-4-7895-1016-5**
• **Pearson Thomas W., Howard J. Dawson, And Homer B. Lackey: "Natural occurring levels of dimethyl sulfoxide in selected fruits, vegetables, grains, and beverages", Journal of Agricultural and Food Chemistry, vol. 29, no. 5, 1 January 1981 (1981-01-01), pages 1089-1091, XP055730669,**
• **Hiroaki Matsuura, Katsuji Fujiyama, Yoshihiro Ikeuchi: "Determination of Dimethylsulfide and Dimethyldisulfide in Foods by Thermal Desorption GC/MS", Bunseki Kagaku, vol. 54, no. 11, 1 January 2005 (2005-01-01), pages 1075-1082, XP055778154, ISSN: 0525-1931, DOI: 10.2116/bunsekikagaku.54.1075**
• **Julia Scherb; Johanna Kreissl; Sonja Haupt; Peter Schieberle: "Quantitation of S-Methylmethionine in Raw Vegetables and Green Malt by a Stable Isotope Dilution Assay Using LC-MS/MS: Comparison with Dimethyl Sulfide Formation after Heat Treatment", Journal of Agricultural and Food Chemistry, vol. 57, no. 19, 14 October 2009 (2009-10-14), pages 9091-9096, XP055730663, ISSN: 0021-8561, DOI: 10.1021/jf901765q**

**Description**

Technical Field

The present invention relates to a dry plant powder, food/drink and a method for producing the same, and use of a dried plant powder for enhancing sweet flavor.

Background Art

The dried vegetables are generally dried by a crushing such as cutting or grating of vegetables and a drying step such as spray drying or freeze drying. Therefore, the cellular tissue of vegetables is destroyed, and the components in the cells come into contact with air, and the components in the vegetables are denatured by the reaction or the oxidation reaction by the endogenous enzyme, so that a dry odor such as a raw odor or an off-flavor such as soil odor is generated, and the flavor thereof is inferior to that of a raw vegetable or a frozen vegetable has become problematic.

As a means for suppressing flavor deterioration in a drying step of vegetables, a method is known in which vegetables is subjected to crushing in the presence of an aqueous medium, and then the precipitate obtained by solid-liquid separation is freeze-dried (Patent Literature 1). In addition, a method for producing a dried instant soup and sauce containing vegetables to which a sulfur-containing compound such as glutathione is added is known (Patent Literature 2). Further, a soup is known in which a dry odor is suppressed by blending a mixture of monoglucosyl hesperidin and hesperidin in a specific ratio, and which is good in flavor and easy to continuously ingest, and which can be easily ingested (Patent Literature 3). US2008182006 discloses a free flowing vegetable powder characterized by a mass weighted average particle size within the range of 10-500 microns and a dietary fiber content exceeding 6% by weight of vegetable dry matter. The vegetable powder provides a pleasant taste, appearance and texture.

Citations

Patent Literatures

    Patent Literature 1: JP-A-Hei 07-298849
    Patent Literature 2: WO-A-99/56566
    Patent Literature 3: JP-A-2009-142244

Summary of the Invention

Problem

However, among the conventional methods of improving or suppressing the drying odor of dried vegetables described above, in the method of subjecting vegetables to crushing in the presence of an aqueous medium and then freeze-drying the precipitate obtained by the solid-liquid separation, when the process is complicated and the vegetables are processed in a large amount, the device becomes large and expensive, and as a result of inevitable contact with air, the effect is not necessarily sufficient. In addition, in a method using a sulfur-containing compound such as glutathione, a sulfur odor peculiar to the sulfur-containing compound is caused, so that the flavor tends to be affected. In addition, in the method using a specific ratio of monoglucosyl hesperidin and hesperidin, these components need to be dissolved in the soup, which is not a technique applicable to dry plant powder.

The present invention aims to provide a method for easily controlling dry odors and extracting plant-specific sweet flavors in dry plant powders.

Solution to Problem

As a result of energetic studies in view of the above circumstances, the present inventors found that the above problem can be easily solved simultaneously by containing a specific amount of dietary fiber and a sulfur-containing compound and also setting the particle diameter of the dried plant powder to a constant value or less, thereby completing the present invention.

That is, the present invention is as defined in the appended set of claims.

Advantageous Effect of the Invention

The present invention facilitates to provide a means for easily controlling the dry odor and extracting the sweet flavor peculiar to the plant in the dried plant powder.

Description of Embodiment

Examples of the embodiments of the present invention are described below, but the present invention is not limited to these embodiments.

The plant in the present invention refers to a plant which is eaten or drunk by human beings and contains an edible part and/or an inedible part, i.e., an edible plant. The plant in the present invention may be any plant that is eaten or drunk by human beings and is not limited in any way, and examples thereof include vegetables, potatoes, mushrooms, fruits, algae, grains, nuts, and beans. The present invention is more useful for vegetables, potatoes, mushrooms, fruits, algae, grains, nuts, and beans, which inherently contain sweet components, and further useful for vegetables, potatoes, mushrooms, fruits, nuts, grains, and beans, and particularly useful for vegetables, potatoes, nuts, grains, and beans.

Specifically, it is possible to understand which food corresponds to the edible plant by, for example, referring to grains, potatoes, beans, nuts, vegetables, fruits, mushrooms, algae, and spices in the classification described in " Standard Tables of Food Composition in Japan, 2015 (Seventh Revised Version), Supplement, 2018" (see the Food composition tables provided by the Ministry of Health, Labor and Welfare, in particular, Table 1 on page 236). These edible plants may be used alone or in a combination of two or more thereof. These edible plants may be directly used or may be used after various treatments (e.g., drying, heating, harshness removal, peeling, seed removal, ripening, salting, and pericarp processing). The classification of a foodstuff can be judged based on the state of the whole plant including the inedible part.

The powdery food of the present invention preferably includes an insoluble dietary fiber localization site because dimethyl sulfoxide and/or dimethyl sulfide is held by the dietary fibers and is less likely to decrease during crushing and drying and thereby the dried plant powder can have excellent preservability. The insoluble dietary fiber localization site in the present invention is a site where insoluble dietary fibers are localized in the entire foodstuff including an edible part and an inedible part, specifically, a site having a content ratio of insoluble dietary fibers higher than that of insoluble dietary fibers in the entire foodstuff and is more preferably a site where the content ratio of insoluble dietary fibers is 1.1 times or more the content ratio of insoluble dietary fibers in the entire foodstuff, more preferably 1.2 times or more, more preferably 1.3 times or more, more preferably 1.4 times or more, more preferably 1.5 times or more, more preferably 1.6 times or more, more preferably 1.7 times or more, more preferably 1.8 times or more, more preferably 1.9 times or more, and most preferably 2.0 times or more.

The content ratio of insoluble dietary fiber in the insoluble dietary fiber localization site is, in terms of dry weight, preferably higher than 10 mass%, more preferably higher than 11 mass%, more preferably higher than 12 mass%, more preferably higher than 13 mass%, more preferably higher than 14 mass%, more preferably higher than 15 mass%, more preferably higher than 16 mass%, more preferably higher than 17 mass%, more preferably higher than 18 mass%, more preferably higher than 19 mass%, and more preferably higher than 20 mass%.

Although the insoluble dietary fiber localization site in the present invention may be the "edible part" or the "inedible part" of the above-mentioned foodstuffs, the insoluble dietary fiber localization site is preferably the "inedible part".

The site and the proportion of the inedible part in a foodstuff (dried plant) to be used in the present invention and/or another foodstuff (not containing insoluble dietary fibers) can be naturally understood by those skilled in the art who handle foods or processed products of foods. For example, the "disposal part" and the "wastage rate" described in "the Standard Tables of Food Composition in Japan, 2015, (Seventh Revised Version)" can be referred to and used as the site and the proportion of the inedible part, respectively. Based on the site and the proportion of the inedible part in a foodstuff, the site and the proportion of the edible part, consequently, the sites constituting the entire foodstuff, can also be understood.

Examples of the vegetables include, but not limited to, Japanese radish, carrot, rutabaga, parsnip, turnip, black salsify, lotus root, beet (preferably a beet (beetroot): a variety improved to make roots edible), arrowhead, shallot, garlic, scallion, lily bulb, kale, onion, asparagus, udo (Aralia cordata), cabbage, lettuce, spinach, Chinese cabbage, rape, komatsuna (Brassica rapa var. perviridis), green pak choi, Chinese chive, green onion, nozawana (Brassica rapa L. var. hakabura), fuki (Petasites japonicus), Swiss chard, potherb mustard, tomato, eggplant, pumpkin, bell pepper, cucumber, myoga, cauliflower, broccoli, edible chrysanthemum, bitter melon, okra, artichoke, zucchini, sugar beet, tigernut, ginger, perilla, Japanese horseradish, paprika, herbs (watercress, coriander, water spinach, celery, tarragon, chives, chervil, sage, thyme, laurel, parsley, leaf mustard (mustard green), Japanese mugwort, basil, oregano, rosemary, peppermint, savory, lemongrass, dill, wasabi leaf, Japanese pepper leaf, and stevia), bracken, osmund, and bamboo shoot. Among them, preferred are, for example, carrot, pumpkin, tomato, paprika, cabbage, beet (preferably beets (beet root)), onion, broccoli, asparagus, spinach, and kale, and particularly preferred are, for example, carrot, pumpkin, paprika, beet (preferably beets (beet root)), broccoli, spinach, kale, and tomato.

Examples of the potatoes include, but not limited to, sweet potato, cassava, yacon, taro, eddoe, elephant foot (Amorphophallus konjac), Polynesian arrowroot (Tacca leontopetaloides), potato, purple sweet potato, kikuimo (Helianthus tuberosus), katakuri (Dogtooth violet), yam, Japanese yam, Chinese yam, and kudzu. Among them, for example, purple sweet potato and sweet potato are particularly preferable.

Examples of the mushrooms include, but not limited to, shiitake mushroom, matsutake mushroom, Jew's ear fungus, maitake mushroom, bracket fungus, oyster mushroom, king trumpet mushroom, enokitake (Flammulina velutipes), shimeji mushroom, honey mushroom, mushroom, butterscotch mushroom, jersey cow mushroom, hatsutake (Lactarius hatsudake), and chichitake (Lactarius volemus).

Examples of the fruits include, but not limited to, Chinese quince, Chinese white pear (white pear, Chinese pear), pear, quince, common medlar, juneberry (Amelanchier canadensis), shipova, apple, American cherry (black cherry, dark cherry), apricot, plum, cherry (sweet cherry), sour cherry, blackthorn, Japanese plum, peach, ginkgo, chestnut, akebia, fig tree, persimmon, blackcurrant, raspberry, kiwifruit, gumi (Elaeagnus), mulberry, cranberry, lingonberry, pomegranate, hardy kiwi, sea buckthorn, currant, jujube, Japanese bush cherry, honeyberry, bilberry, redcurrant, grape, blackberry, blueberry, pawpaw, matsubusa (Schisandra nigra), raspberry, downy cherry, mandarin orange, Kumquat, karatachi (Poncirus trifoliata), olive, Japanese loquat, red bayberry, rakanka (Siraitia grosvenorii), tropical fruits (such as mango, mangosteen, papaya, cherimoya, atemoya, banana, durian, starfruit, guava, pineapple, acerola, passion fruit, dragon fruit, lychee, and eggfruit), strawberry, watermelon, melon, avocado, miracle fruit, orange, lemon, prune, yuzu, sudachi, grapefruit, bitter orange, and shikuwasa (Citrus depressa).

Examples of the algae include, but not limited to, large algae, such as kelp, wakame, laver, green laver, and tengusa (Gelidium amansii); and microalgae, such as green algae, red algae, blue algae, dinoflagellates, and euglena. Specifically, the examples include sea lettuce, blue laver, anaaosa (Ulva australis), sea grape, katashiokusa (Cladophora ohuboana), kubiredsuta (Caulerpa lentillifera), kuromiru (Codium divaricatum), tamamiru (Codium minus), Yuikiri (Acanthopeltis japonica), hitoegusa (green laver, Monostroma nitidum), hiraaonori (green laver, Ulva compressa), fusaiwadsuta (Caulerpa okamurae), bouaonori (green laver, Ulva intestinalis), akamoku (Sargassum horneri), amizigusa (Dictyota dichotoma), arame (Eisenia bicyclis), antokume (Eckloniopsis radicosa), ishige (Ishige okamurae), ichimegasa (Carpomitra costata), iroro(Ishige foliacea), iwahige (Myelophycus simplex), umitoranoo (Sargassum thunbergii), umiuchiwa (Padina arborescens), oobamoku (Sargassum ringgoldianum), okinawamozuku (Cladosiphon okamuranus), kaigaraamanori (Porphyra tenuipedalis), kagomenori (Hydroclathrus clathratus), kazime (arame, Ecklonia bicyclis), kayamonori (Scytosiphon lomentaria), gibasa (Sargassum horneri), sanadagusa (Pachydictyon coriaceum), shiwanokawa (Petrospongium rugosum), shiwayahazu (Dictyopteris undulata), seiyouhabanori (Petalonia fascia), tsuruarame (Ecklonia stolomifera), nanori (kayamonori, Scytosiphon lomentaria), nebarimo (Leathsia difformis), nokogirimoku (Sargassum serratifolium), habanori (Petalonia binghamiae), hiziki (Hizikia fusiformis), hirome (Undaria undariodes), fukuronori (Colpomenia sinuosa), futomodzuku (Tinocladia crassa), hondawara (Sargassum fulvellum), Japanese tangle, matsumo (Heterochordaria abietina), kayamonori (Scytosiphon lomentaria), mutimo (Mutimo cylindricus), Namacystus (mozuku), yuna (Chondria crassicaulis), wakame (Undaria pinnatifida), asakusanori (Porphyra tenera), ibotsunomata (Chondrus verrucosa), ushikenori (Bangia fusco-purpurea), usukawakaninote (Amphiroa zonata), kurohaginnansou (Chondrus yendoi), oobusa (Gelidium pacificum), ogonori (Gracilaria verrucose), okitsunori (Gymnogongrus flabelliformis), obakusa (Pterocladia capillacea), katanori (Grateloupia divaricate), kabanori (Gracilaria textorii), kamogashiranori (Dermonema pulvinatum), kizinoo (Phacelocarpus japonicus), kurohaginnanso (Chondrus yendoi), sakuranori (Grateloupia imbricata), shiramo (Gracilaria bursa-pastoris), tanbanori (Pachymeniopsis elliptica), tsunomata (Chondrus ocellatus), tsurushiramo (Gracilaria chorda), turuturu (Grateloupia turuturu), tosakanori (Meristotheca papulose), tosakamatsu (Carpopeltis crispata), fukurofunori (Gloiopeltis furcata), susabinori (Pyropia yezoensis), hanafunori (Gloiopeltis complanata), harigane (Ahnfeltia paradoxa), hiragaragara (Galaxaura falcata), hirakusa (Beckerella subcostata), hiramukade (Grateloupia livida), pirihiba (Corallina pilulifera), fukurofunori (Gloiopeltis furcata), fushitsunagi (Lomentaria catenata), makusa (Gelidium amansii), marubaamanori (Phycocalidia suborbiculata), mitsudesozo (Laurencia okamurae), euglena, chlorella, mirin (Solieria robusta), mukadenori (Grateloupia filicina), yuikiri (Acanthopeltis japonica), yukari (Plocamium telfairiae, and agar weed. Among these algae, since some microalgae, such as chlorella, have very strong cell walls, it is preferable to use the microalgae after pretreatment for destroying the cell walls. Alternatively, it is preferable to use algae other than microalgae.

Examples of the nuts include, but not limited to, almond, cashew nut, pecan, macadamia nut, pistachio, hazelnut, coconut, pine nut, sunflower seed, pumpkin seed, watermelon seed, chinquapin, walnut, chestnut, ginkgo, sesame, and brazil nut. Among them, preferred are, for example, almond, cashew nut, macadamia nut, pistachio, hazelnut, and coconut.

Examples of the beans include, but not limited to, green bean, kidney bean, red kidney bean, white kidney bean, black turtle bean, pinto bean, tiger bean, lima bean, runner bean, peas (e.g., yellow pea, white pea, green pea, and blue pea, in particular, green pea, which is an immature seed harvested immature with the pod and is characterized by the green appearance), pigeon pea, mung bean, cowpea, azuki bean, broad bean, soybean (in particular, green soybean), chickpea, lentil, hiramame (Lens culinaris), lentil, peanut, lupinus bean, grasspea, carob, petai, nere, coffee bean, cacao bean, and Mexican jumping bean. A foodstuff of which a partial edible part is treated as a vegetable (e.g., green soybean or green pea) also can be judged whether it is a bean or not based on the state of the whole plant (e.g., soybean or pea) including the non-edible part (such as a pod). In particular, preferred are, for example, pea (in particular, green pea, which is an immature seed harvested immature with the pod and is characterized by the green appearance), soybean (in particular, green soybean, which is an immature soybean seed harvested immature with the pod and is characterized by the green appearance), and broad bean.

Examples of the grains include, but not limited to, corn (in particular, preferably sweet corn), rice, wheat, barley, sorghum, oat, triticale, rye, buckwheat, fonio, quinoa, Japanese barnyard millet, foxtail millet, proso millet, giant corn, sugar cane, and amaranth. Among them, preferred are, for example, corn (in particular, preferably sweet corn) and giant corn.

The dried plant of the present invention may be prepared by drying the above-mentioned edible plants. As the drying method, any method that is generally used for drying foods can be used. Examples of the method include sun drying, shade drying, freeze drying, air drying (e.g., hot air drying, fluidized bed drying, spray drying, drum drying, or low temperature drying), press drying, reduced pressure drying, microwave drying, and oil heat drying. In particular, a method by air drying (e.g., hot air drying, fluidized bed drying, spray drying, drum drying, or low temperature drying) or freeze drying is preferred because the degree of change in color tone or flavor inherently possessed by a plant is small and the scent (e.g., burnt odor) other than the food can be controlled.

The "dry" state in the present invention refers to a state that the water content is about 20 mass% or less and the water activity value is 0.85 or less. In addition, the water content is more preferably 15 mass% or less, more preferably 10 mass% or less, and more preferably 5 mass% or more. The lower limit is not particularly limited and is usually 0.1 mass% or more. Furthermore, the water activity value is preferably 0.80 or less and more preferably 0.75 or less.

As a method for quantitatively measuring water, a method of subjecting a dried plant powder to reduced pressure heat drying may be used. Specifically, an appropriate amount of a specimen is placed in a scale container previously adjusted to a constant weight (W0) and is measured to the digit of 0.1 mg (W1). At ordinary pressure, the scale container with the lid removed or the aperture open is put in a reduced pressure electric constant temperature dryer adjusted to a predetermined temperature (more specifically 90°C). The door is closed, the vacuum pump is operated, and drying is performed at a predetermined degree of reduced pressure for a certain period of time. The vacuum pump is stopped, the pressure is returned to ordinary pressure by sending dry air, the scale container is taken out, the lid is put on the container, and after allowing to cool in a desiccator, the mass is weighed. The drying, cooling, and weighing the mass are repeated until a constant weight (W2, measured to the digit of 0.1 mg) is achieved. The water content (mass%) is determined by the following calculation equation:

$$\mathtt{Water\ (g/100\ g)\ =\ (W1\ -\ W2)/(W1\ -\ W0)\ \times\ 100}$$

W0: mass (g) of the scale container adjusted to constant weight,

W1: mass (g) of the scale container containing a specimen before drying, and
W2: mass (g) of the scale container containing the specimen after drying.

The water activity value is a numerical value representing the proportion of free water in a food and is used as an indicator of the preservability of a food. Specifically, it is the value obtained by dividing the equilibrium vapor pressure (p) in the headspace on a sample by the vapor pressure (p0) of water at the same temperature, in other words, the value obtained by dividing the equilibrium relative humidity (ERH) in the headspace by 100. The water activity value can be measured with a general water activity measuring device (e.g., "LabMaster-aw NEO" manufactured by Novasina AG, employing an electric resistance based (electrolyte based) humidity sensor).

In addition, in the dried plant powder of the present invention, the crushing method used for pulverization is not particularly limited. The temperature at the time of crushing is not limited either, and any of high-temperature crushing, ordinary-temperature crushing, and low-temperature crushing may be performed. The pressure at the time of crushing is not limited either, and any of high-pressure crushing, ordinary-pressure crushing, and low-pressure crushing may be performed. Examples of the apparatus for such crushing include equipment, such as a blender, a mixer, a mill, a kneader, a grinder, a crusher, and an attritor, and any of these apparatuses may be used. As such an apparatus, for example, a medium stirring mill, such as a dry bead mill and a ball mill (a rolling type, a vibration type, etc.), a jet mill, a high-speed rotary impact type mill (e.g., pin mill), a roll mill, or a hammer mill can be used.

The dried plant powder of the present invention contains a certain amount or more of dietary fibers. The dietary fibers mentioned here refer to the total amount of water-soluble dietary fibers and insoluble dietary fibers. Specifically, the dietary fiber content in the dried plant powder of the present invention may be generally 5 mass% or more in terms of dry weight and is, in particular, preferably 6 mass% or more, more preferably 8 mass% or more, preferably 9 mass% or more, and particularly preferably 10 mass% or more. The upper limit of the dietary fiber content is preferably 90 mass% or less, more preferably 80 mass% or less, more preferably 70 mass% or less, more preferably 60 mass% or less, and even more preferably 50 mass% or less.

Since a dried plant powder having a predetermined proportion or more of insoluble dietary fibers accounting for the dietary fibers more easily generates a dry odor, which is a problem to be solved by the present invention, such a dried plant powder is preferable, because the present invention can be usefully used. Specifically, the proportion of the insoluble dietary fibers accounting for the dietary fibers is preferably 50 mass% or more, more preferably 60 mass% or more, and most preferably 70 mass% or more. In addition, the insoluble dietary fiber content is preferably 5 mass% or more in terms of dry weight and is, in particular, preferably 6 mass% or more, more preferably 8 mass% or more, preferably 9 mass% or more, and particularly preferably 10 mass% or more. Furthermore, the upper limit of the insoluble dietary fiber content is preferably 90 mass% or less, more preferably 80 mass% or less, more preferably 70 mass% or less, more preferably 60 mass% or less, and more preferably 50 mass% or less. As the method for quantitatively measuring dietary fibers including insoluble dietary fibers, a general modified Prosky method can be used.

The dried plant powder of the present invention contains a certain amount or more of dimethyl sulfoxide (CAS. No. 67-68-5, another name: DMSO) from the viewpoint of suppressing the dry odor and enhancing the sweet flavor. Specifically, the lower limit may be 1 ppb or more and is, in particular, from the viewpoint of showing the effects of the present invention more strongly, preferably 3 ppb or more, more preferably 5 ppb or more, and particularly preferably 10 ppb or more. At the same time, the upper limit may be 40,000 ppb or less and is, from the viewpoint of the risk of occurrence of off-flavor, preferably 30,000 ppb or less, in particular, preferably 20,000 ppb or less, more preferably 10,000 ppb or less, in particular, preferably 5,000 ppb or less, and particularly preferably 2,000 ppb or less. A too high concentration of dimethyl sulfoxide readily causes off-flavor and therefore is not preferable.

The dried plant powder of the present invention preferably contains a certain amount or more of dimethyl sulfide (CAS. No. 75-18-3, another name: DMS) from the viewpoint of suppressing the dry odor and enhancing the sweet flavor. Specifically, the lower limit may be 1 ppb or more and is, in particular, from the viewpoint of showing the effects of the present invention more strongly, preferably 3 ppb or more, more preferably 5 ppb or more, and particularly preferably 10 ppb or more. At the same time, the upper limit may be 2,000 ppb or less and is, from the viewpoint of the risk of occurrence of off-flavor, preferably 1,500 ppb or less, in particular, preferably 1,000 ppb or less, more preferably 800 ppb or less, more preferably 700 ppb or less, more preferably 600 ppb or less, more preferably 500 ppb or less, more preferably 400 ppb or less, and particularly preferably 300 ppb or less. A too high concentration of dimethyl sulfide makes the component scent too noticeable and therefore is not preferable.

The dried plant powder of the present invention is, from the viewpoint of suppressing the dry odor and enhancing the sweet flavor, preferably adjusted such that certain amounts or more of dimethyl sulfoxide and dimethyl sulfide are at a predetermined proportion, because gorgeous scent and rich flavor derived from the plant are easily felt. Specifically, the ratio of the dimethyl sulfoxide content to the dimethyl sulfide content, (DMSO concentration/DMS concentration), is usually 180 or less, and, in particular, it is preferable that the ratio is adjusted to be 150 or less, more preferably 130 or less, further 110 or less, further 90 or less, further 70 or less, further 50 or less, further 30 or less, and further 15 or less. In addition, the lower limit is not particularly limited and is usually 0.001 or more, and, in particular, it is preferable that the ratio is adjusted to be 0.005 or more, further 0.01 or more, further 0.10 or more, further 0.15 or more, further 0.20 or more, further 0.25 or more, and further 0.30 or more.

In the present invention, the peak area ratio of confirmation ions (dimethyl sulfoxide: 78, dimethyl sulfide: 62), (DMSO/DMS), of each component extracted in 5 mass% aqueous solution (1 part by mass of powder : 19 parts by mass of water) and volatilized is preferably adjusted to a predetermined proportion by two-dimensional gas chromatography analysis using full evaporation-dynamic headspace-gas chromatography-mass spectrometry (FE-DHS-GCMS method) described below, because an effect of denying the scent of dimethyl sulfide by dimethyl sulfoxide is obtained. Specifically, the peak area ratio (DMSO/DMS) is usually 0.1 or more and, in particular, is preferably adjusted to 0.3 or more. In addition, the peak area ratio is usually less than 10 and, in particular, is preferably adjusted to less than 8. In particular, a content of dimethyl sulfide of 3 ppb, which is the threshold, or more is more preferable because the scent of dimethyl sulfide is appropriately prominent.

It is known that dimethyl sulfoxide (DMSO) is contained in beer and whiskey in Japan and abroad in an amount of about several parts per million. However, dimethyl sulfoxide itself is odorless and is thought to hardly affect their flavors, and the effects of suppressing the dry odor of a plant powder and enhancing the sweet flavor have not been known at all. Furthermore, it has not been known at all that when a regulated amount of dimethyl sulfide (DMS), which is similarly known to be generated during the process of beer brewing, is contained together with dimethyl sulfoxide, the effects of suppressing the dry odor of a plant powder and enhancing the sweet flavor are further accelerated.

In the present invention, the content of dimethyl sulfoxide can be measured according to, for example, a usual method, such as a combination of the following GC/MS assay and a pulsed flame photometric detector.

As the method for extracting dimethyl sulfoxide and the like from a specimen, although a method which is usually used as a method for extracting aroma components, such as a solvent extraction method or an SBSE method, may be used, in particular, since dimethyl sulfoxide has significantly high affinity to water, it is preferable to measure by a full evaporation-dynamic headspace-gas chromatography-mass spectrometry (hereinafter, "FE-DHS-GCMS") method, which measures a water-soluble component that cannot be measured by ordinary analysis, preferably by forcibly volatilizing a very small amount of a specimen thoroughly by a DHS method. Dimethyl sulfide can also be analyzed by the same method. The analysis can be performed by, for example, well homogenizing a specimen in an appropriate amount (preferably 20 times amount) of water to extract components, removing the solid content by, for example, filtration, weighing a very small amount (preferably 0.03 g) of the residue in a 10-mL flat bottom vial, then sealing the vial, forcibly volatilizing the whole quantity of the specimen by purging with an excess amount of nitrogen gas for adsorbing the specimen to an adsorption resin (preferably Tenax column) according to the properties of the analytical component, and then introducing the adsorbed component to a two-dimensional gas chromatographic analyzer by treatment with a heating and desorbing system. In addition, in order to measure the concentration of a component in a specimen, a sample containing a standard at a predetermined concentration in the specimen and a sample not containing the standard are analyzed, the peak area increased by addition of the standard at the predetermined concentration is grasped from the difference in the analysis values of both samples, and the concentration of the component in the specimen before addition of the standard can be measured.

After the analysis above, a part of the specimen is applied to a mass spectrometer to obtain a mass spectrum for verification with the related ions of each component (dimethyl sulfoxide: 45, 63, and 78, dimethyl sulfide: 35, 47, and 62).

Although the mass spectrometer (MS) is not specifically limited as long as it has sufficient performance for general mass spectrum analysis, specifically, the mass spectrometers which can be used are a quadrupole type, an ion trap type, a time-of-flight type, and a tandem type. Preferably, for example, 5973 Mass Selective Detector (manufactured by Agilent Technologies, Inc.) can be used. Although the ionization method and the ionization voltage may be general method and voltage conditions, preferred are, for example, electron ionization method (EI), electrospray ionization method (ESI), matrix-assisted laser desorption ionization method (MALDI), chemical ionization method (CI), and field desorption method (FD). Preferably, the mass spectrum analysis can be performed by, for example, carrying out an ionization method: EI+ under conditions of ionization voltage: 70 eV, incorporating the result by a scan mode, and carrying out identification using ions characteristic to each component (dimethyl sulfoxide: 45, 63, and 78, dimethyl sulfide: 35, 47, and 62) as related ions. The retention times of dimethyl sulfoxide and dimethyl sulfide can be specified by specifying the retention times at which all these related ions are detected for the standard.

Specifically, FE-DHS-GC-MS analysis can be performed under the conditions as below.

[GC-MS conditions (Full evaporation dynamic headspace (FE-DHS) injection method)]

- Apparatus: 7890B (GC) and 5977B (MS) manufactured by Agilent Technologies, Inc., and MultiPurpose Sampler (auto-sampler) manufactured by Gerstel GmbH & Co., KG
- Adsorption resin: TENAX
- Incubation temperature: 80°C
- Nitrogen gas purge volume: 3 L
- Nitrogen gas purge flow rate: 100 mL/min
- TDU: [30°C] - [210°C/min] - [240°C (3 min)]
- CIS: [10°C]-[120°C/sec]-[240°C] (liner filler: TENAX)
- Column: DB-WAX (30 m $\times$ 250 $\mu$m $\times$ 0.25 $\mu$m) manufactured by Gerstel GmbH & Co., KG
- Column temperature: [40°C (3 min)]-[5°C/min]-[240°C (7 min)]
- Carrier gas: He
- Transfer line: 250°C
- Ion source temperature: 230°C
- Scan Parameter: m/z = 28.7 to 300
- Split: none

In addition, a sulfur-containing compound (such as dimethyl sulfoxide) at a very low concentration in a specimen can be detected by applying a part of the specimen to a pulsed flame photometric detector and analyzing the sulfur compound in the specimen. The pulsed flame photometric detector may be any general pulsed flame photometric detector. For example, OI Analytical 5380 Pulsed Flame Photometric Detector (manufactured by Xylem Inc.) can be used. Analysis of a specimen can be performed by S mode (condition optimized for sulfur).

Under the conditions above, an authentic preparation of dimethyl sulfoxide and dimethyl sulfide (manufactured by FUJIFILM Wako Pure Chemical Corporation) having known concentrations are diluted with water to appropriate concentrations and were added to a specimen for analysis. A pulsed flame photometric detector can selectively detect only a sulfur compound by burning a material in a reducing hydrogen flame and detecting light having a specific wavelength of 394 nm occurring at that time, and also a trace amount of a sulfur component can be detected. In addition, the detector can be used for detecting a trace amount of a sulfur compound by utilizing its high selectivity. In addition, dimethyl sulfoxide having almost no odor and dimethyl sulfide having a strong odor can be distinguished from each other by also performing olfactometry in the detection. Peaks near a retention time of about 22 minutes are determined as dimethyl sulfoxide and dimethyl sulfide by a combination of high-sensitive sulfur component-detecting ability of the pulsed flame photometric detector, qualitative analysis based on a mass spectral pattern with a mass spectrometer, and discrimination based on aroma characteristics by olfactometry; the components in a specimen can be quantitatively measured by comparing the amounts of confirmation ions (dimethyl sulfoxide: 78, dimethyl sulfide: 62) in the authentic preparation-free area and the authentic preparation-added area; and the peak area ratio of the confirmation ions (dimethyl sulfoxide: 78, dimethyl sulfide: 62), (DMSO/DMS), of each component extracted in 5 mass% aqueous solution and volatilized can be measured by FE-DHS-GCMS analysis implemented under the above-described suitable conditions.

Furthermore, it is particularly preferable to half-cut the area near the retention time of a peak which seems to be the target component and implement two-dimensional gas chromatography with columns of different properties, because quantitative measurement of the component concentration and measurement of the peak area ratio of the confirmation ions (dimethyl sulfoxide: 78, dimethyl sulfide: 62), (DMSO/DMS), of each component extracted in 5 mass% aqueous solution and volatilized can be more exactly performed.

Specifically, the two-dimensional gas chromatography analysis can be performed under the following conditions.

[Two-dimensional GC-MS conditions]

- CTS: [-150°C]-[20°C/sec]-[250°C]
- Column: DB-5 (10 m $\times$ 180 $\mu$m $\times$ 0.4 $\mu$m) manufactured by Gerstel GmbH & Co., KG
- Column temperature: [40°C (0 min)]-[40°C/min]-[240°C (15 min)]
- Carrier gas: He

Although dimethyl sulfoxide in the present invention may be contained in a dried plant in a pure form or as a composition containing it, when the dried plant powder of the present invention is served for eating or drinking, the components such as dimethyl sulfoxide are preferably derived from a food or drink and more preferably derived from a plant. The same also applies to dimethyl sulfide.

In addition, in the present invention, the d50 of particle size of the dried plant powder after ultrasonication is preferably a predetermined value or less from the viewpoint of suppressing the dry odor and enhancing the sweet flavor. Specifically, the d50 of particle size may be 1,000 $\mu$m or less and is, in particular, preferably 600 $\mu$m or less and more preferably 200 $\mu$m or less.

The d50 of particle size of the dried plant powder is defined as the particle size at which the ratio of the proportion of the cumulative value of particle frequency % on the large side to the proportion of the cumulative value of particle frequency % on the small side is 50 : 50 when the particle size distribution of the dried plant powder is divided into two from a certain particle size. The d50 of particle size of a dried plant powder can be measured using, for example, a laser diffraction particle size distribution analyzer described below. The term "particle size" here refers to that measured on a volume basis unless otherwise specified.

The conditions for measuring the d50 of particle size of the dried plant powder of the present invention after ultrasonication can be, but not limited to, the following conditions. First, the solvent used at the time of measurement may be any solvent which hardly affects the structure of the dried plant powder. As an example, ethanol is preferable. The laser diffraction particle size distribution analyzer used for the measurement can be, for example, but not limited to, Microtrac MT3300 EXII system of MicrotracBEL Corporation. The measurement application software can be, for example, but not limited to, DMS2 (Data Management System version 2, MicrotracBEL Corporation). When the measurement apparatus and the software above are used, measurement may be performed by pressing down the washing button of the software to implement washing, then pressing down the set zero button of the software to implement zero adjustment, and directly charging a sample by sample loading until the concentration of the sample falls within an appropriate range. When a sample after disturbance, i.e., a sample subjected to ultrasonication, is measured, a previously ultrasonicated sample may be charged, or a sample may be charged, then ultrasonicated using the above-mentioned measurement apparatus, and subsequently subjected to the measurement. In the latter case, a sample not subjected to ultrasonication is charged, the concentration is adjusted within an appropriate range by sample loading, and the ultrasonication button of the software is then pressed down to perform ultrasonication. Subsequently, defoaming is performed three times, and then sample loading is performed again. Immediately after verification that the concentration is still within the appropriate range, laser diffraction is performed at a flow rate of 60% for a measurement time of 10 seconds, and the result can be used as the measured value. In the present invention, the "ultrasonication" is treatment of applying ultrasonic waves having a frequency of 40 kHz to a measurement sample at an output of 40 W for 3 minutes, unless otherwise specified. The parameters at the time of measurement can be, for example, distribution display: volume, particle refractive index: 1.60, solvent refractive index: 1.36, upper limit of measurement (μm) = 2,000.00 μm, and lower limit of measurement (μm) = 0.021 μm.

In the determination of the d50 of particle size of the dried plant powder of the present invention, it is preferable to measure the particle size distribution at each channel (CH) and then determine the d50 using the particle size for each measurement channel shown in Table 1 below as the standard. Specifically, the particle frequency % of each channel (which is also referred to as "particle frequency % of XX channel") can be determined by measuring the frequency of particles which are not larger than the particle size specified for each of the channels shown in Table 1 below and larger than the particle size (in the channel largest in the measurement range, measurement lower limit of particle size) specified for the channel with one larger number for each channel shown in Table 1 and using the total frequency of all channels within the measurement range as the denominator. For example, the particle frequency % of channel 1 represents the frequency % of particles having sizes of 2,000.00 μm or less and higher than 1,826.00 μm.

[Table 1]

| Channel | Particle size (μm) | Channel | Particle size (μm) | Channel | Particle size (μm) | Channel | Particle size (μm) |
|---------|--------------------|---------|--------------------|---------|--------------------|---------|--------------------|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |

(continued)

| Channel | Particle size (μm) | Channel | Particle size (μm) | Channel | Particle size (μm) | Channel | Particle size (μm) |
|---|---|---|---|---|---|---|---|
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

The dried plant powder of the present invention can be manufactured by crushing a dried plant containing a predetermined amount or more of dietary fibers such that the d50 of particle size after ultrasonication is a predetermined value or less and adding a predetermined amount of dimethyl sulfoxide and/or dimethyl sulfide thereto. Details are as described above. Dimethyl sulfoxide and/or dimethyl sulfide in a pure form or a composition containing them may be added to or mixed with a powder of a plant before drying or may be added to a dried plant after drying and before crushing and then performing crushing or may be added to a dried plant powder. As described above, in a mode of serving the dried plant powder of the present invention for eating or drying, the composition containing dimethyl sulfoxide is preferably a foodstuff (edible plant) containing dimethyl sulfoxide and/or dimethyl sulfide, in particular, preferably derived from a plant, and preferably contains a site where the component is localized (e.g., inedible part) in the sites derived from a plant. The same also applies to dimethyl sulfide.

The present invention also encompasses the use for enhancing sweet flavor of a dried plant powder by adding a predetermined amount of dimethyl sulfoxide and/or dimethyl sulfide to a crushed dried plant having a dietary fiber content at a predetermined amount of more and d50 of particle size after ultrasonication at a predetermined value or less. Details are as described above. As described above, the dry odor is reduced and the characteristic sweet flavor inherent in a plant is enhanced by adding a certain content range of dimethyl sulfoxide and/or dimethyl sulfide to a dried plant having a dietary fiber content at a predetermined amount or more and d50 of particle size after ultrasonication at a predetermined value or less.

The present invention also encompasses a food or drink containing the dried plant powder of the present invention. That is, in a food or drink containing a dried plant powder, the pleasant flavor of an edible plant in which dry odor has been suppressed and sweet flavor characteristic to the plant has been enhanced can be imparted to the food or drink containing the dried plant powder, and the flavor of the food or drink can be improved by the effects of the dried plant powder of the present invention. Although the amount of the dried plant powder of the present invention contained in a food or drink is not particularly limited and may be appropriately adjusted such that the flavor of the edible plant as the raw material of the dried plant powder can be imparted to the food or drink, the proportion of the edible plant with respect to the total amount of the food or drink is preferably 10 mass% or more, in terms of dry weight, more preferably 20 mass% or more, more preferably 30 mass% or more, and particularly preferably 40 mass% or more. In addition, the upper limit is preferably 100 mass% or less.

The dried plant powder of the present invention may contain another foodstuff as long as it does not interfere with the function and effect of the present invention. Specifically, such a foodstuff is a foodstuff or ingredient larger than 2,000 μm (2 mm) which is not the target of laser diffraction particle size distribution measurement. Examples thereof include grain puffs, dried nuts, and dried fruits, and any thereof may be used. These foodstuffs may be used alone or in a combination of two or more thereof.

In this case, the 50% integrated diameter after ultrasonication is measured after removing ingredients of 2,000.00 μm or more which is the measurement upper limit.

Although the food or drink of the present invention is not limited, examples thereof include liquid foods such as beverages (e.g., soup and smoothie), liquid, semi-solid, or solid foods or drinks such as seasonings (e.g., mayonnaise, dressing, butter, and margarine), semi-solid or solid foods such as confectioneries (e.g., granola, sticks, crackers, caramel, gummies, and chips), and powdery foods such as dry seasonings.

Accordingly, the present invention also encompasses a method for manufacturing a food or drink containing fine particles derived from an edible plant of which the d50 of particle size after ultrasonication is 1,000 μm or less by crushing the edible plant having a dietary fiber content of 5 mass% or more in terms of dry weight and containing 1 ppb or more and 40,000 ppb or less of dimethyl sulfoxide , and containing 1 ppb or more and 2,000 ppb or less of dimethyl sulfide in addition to dimethyl sulfoxide , and a ratio of dimethyl sulfoxide content to the dimethyl sulfide content is 0.001 or more and 180 or less. In the above-described manufacturing method, dimethyl sulfoxide and dimethyl sulfide can be added at any timing during the process of manufacturing a food or drink. Details are as described above. Since the present invention exerts an effect of controlling the dry odor of a plant and extracting the sweet flavor characteristic to the plant, the invention can also be used for extracting sweet flavor from fine particles derived from an edible plant which has not been dried and therefore does not have a dry odor, but the invention can be more suitably used for a food or drink containing fine particles derived from a dry edible plant.

The present invention also encompasses a use of a dried plant powder having a d50 after ultrasonication of 1,000 micrometer or less for enhancing sweet flavor, comprising adding dimethyl sulfoxide and dimethyl sulfide to a crushed dried plant having a dietary fiber content of 5 mass% or more in terms of dry weight such that a content of dimethyl sulfoxide is 1 ppb or more and 40,000 ppb or less, a content of dimethyl sulfide is 1 ppb or more and 2,000 ppb or less, and a ratio of the dimethyl sulfoxide content to the dimethyl sulfide content (DMSO concentration/DMS concentration) is 0.001 or more and 180 or less.

Examples

The present invention will now be described in more detail with reference to Examples, but these Examples are merely examples for convenience of description, and the present invention is not limited to these Examples in any sense.

As shown in Tables 2 and 3, dry powders of green pea which is an immature seed of pea, green soybean which is an immature seed of soybean, beet, corn, paprika, pumpkin, and macadamia nut were selected as edible plants. Pure dimethyl sulfoxide and/or dimethyl sulfide (manufactured by FUJIFILM Wako Pure Chemical Corporation) were diluted with water to an appropriate concentration and added to and mixed with the powders to adjust to a certain content (1 mL of water (control) or a dilution of dimethyl sulfide adjusted to an appropriate concentration was added to 10 g of a dried plant powder, followed by well mixing. The concentration of dimethyl sulfoxide and/or dimethyl sulfide was adjusted as the content with respect to the dried plant powder.).

In addition, as shown in Table 4, foods or drinks containing edible plant powders were produced. The paste of Test Example 59 was obtained by mixing 50 mass% of a dried plant powder of soybean (green soybean) as an edible plant with canola oil and then finely grinding the mixture using "RMB easynano" (product name) manufactured by Aimex Co., Ltd. to give a paste. The fine grinding was performed under conditions by using 380 g of zirconia beads of a diameter of 2 mm for 120 mL of the mixture of a powdery food or drink of beet and canola oil at a mill rotation speed of 2,000 rpm and a cooling water temperature of 5°C for 30 minutes. The concentration of dimethyl sulfoxide and/or dimethyl sulfide in a dried plant powder of green soybean used was previously adjusted to the numerical values shown in Table 4 according to the above-described method.

The smoothie of Test Example 60 was prepared by mixing 10 mass% of a dry powder of soybean (green soybean) with water, then filling a 180-mL glass bottle with 150 mL of this mixture, sterilizing the bottle in a hot water bath (achieving temperature: 60°C), and after cooling, performing capping. The concentration of dimethyl sulfoxide and/or dimethyl sulfide in a dried plant powder of green soybean used was previously adjusted to the numerical values shown in Table 4 according to the above-described method.

The d50 after ultrasonication, the dietary fiber content, the contents of dimethyl sulfoxide and dimethyl sulfide, and the peak area ratio (DMSO/DMS) were measured under the above-mentioned suitable conditions. Subsequently, these dry powders and foods or drinks were subjected to sensory inspection for the effect of reducing dry odor, the effect of enhancing sweet flavor, and comprehensive evaluation.

The evaluation criteria are as follows.

<Evaluation criterion No.1: dry odor>

5: Excellent because dry odor is not felt at all;
4: Somewhat excellent because almost no dry odor is felt;
3: Dry odor is moderate but is acceptable range;
2: Slightly inferior because dry odor is slightly strongly felt; and
1: Inferior because dry odor is strongly felt.

Here, the dry odor was evaluated as unpleasant offensive odor, which is not inherently possessed by fresh edible plants, such as fishy or earthy odor.

<Evaluation criterion No.2: sweet flavor>

5: Excellent because sweet flavor is strongly felt;
4: Slightly excellent because sweet flavor is slightly strongly felt;
3: Sweet flavor is medium but is acceptable range;
2: Slightly inferior because sweet flavor is hardly felt; and
1: Inferior because sweet flavor is not felt.

Here, the sweet flavor was evaluated as a pleasant, sweet taste or a sweet scent reminding it, which is inherently possessed by fresh edible plants or is obviously produced when cooked.

<Evaluation criterion No.3: rich flavor>

5: Excellent because mellow flavor is strongly felt;
4: Slightly excellent because mellow flavor is slightly strongly felt;
3: Mellow flavor is medium but is acceptable; and
2: Inferior because mellow flavor is not felt.

Here, the mellow flavor was evaluated as rich and moisturizing taste or scent, which is inherently possessed by fresh edible plants and tends to be lost by drying.

<Evaluation criterion No.4: comprehensive evaluation>

5: Excellent because sweet flavor is strong with no dry odor;
4: Slightly excellent because sweet flavor is slightly strong with almost no dry odor;
3: Dry odor and sweet flavor are both medium but are acceptable ranges;
2: Slightly inferior because dry odor is slightly strong with almost no sweet flavor; and
1: Inferior because dry odor is strong with no sweet flavor.

The sensory inspectors were chosen from inspectors who were trained for the following discrimination tests A) to C) and achieved particularly excellent results, had experience in product development, had a wealth of knowledge about the quality of foods, such as taste and texture, and were capable of performing absolute evaluation on each sensory inspection item.
A) Taste quality discrimination test of correctly discriminating samples for five tastes (sweetness: taste of sugar, sourness: taste of tartaric acid, umami (savoriness): taste of sodium glutamate, saltiness: taste of sodium chloride, and bitterness: taste of caffeine) from aqueous solutions produced so as to have a concentration close to the threshold of each component and two samples of distilled water, seven samples in total;
B) Concentration difference discrimination test of correctly discriminating concentration differences in five sodium chloride aqueous solutions and five acetic acid aqueous solutions having concentrations slightly different from each other; and
C) Triangle discrimination test of correctly discriminating a soy sauce of maker B from two soy sauces of maker A and the soy sauce of maker B, three samples in total.

In each of the evaluation items, all the inspectors evaluated standard samples in advance and standardized each score of the evaluation criteria, and the sensory inspection was then performed with objectivity by 10 inspectors. The evaluation items were evaluated by a system of selecting one number closest to the inspector's own evaluation in five-grade evaluation of each item. The total result of the evaluation was calculated from the arithmetic mean values of the scores by 10 inspectors.

The results are shown in Tables 2 to 4.

[Table 2]

| | Powdery raw material | State | Particle size after ultrasonication d50 (μm) | Dietary fiber (g/100g) | DMSO (ppb) | DMS (ppb) | DMSO concentration / DMS concentration | Sensory inspection | | | |
|---|---|---|---|---|---|---|---|---|---|---|---|
| | | | | | | | | Dry odor | Sweet flavor | Mellow flavor | Comprehensive evaluation |
| Comparative Example 1 | Green pea | Dry powder | 1236.9 | 8.8 | ND (<1) | ND (<1) | - | 1 | 1 | 1 | 1 |
| Comparative Example 2 | | | | | 300 | 100 | 3.00 | 5 | 3 | 4 | 2 |
| Comparative Example 3 | Green pea | Dry powder | 566.5 | 9.3 | ND (<1) | ND (<1) | - | 1 | 1 | 1 | 1 |
| Test Example 1 | | | | | 1 | ND (<1) | - | 4 | 4 | 2 | 4 |

| | Powdery raw material | State | Particle size after ultrasonication d50 ($\mu$m) | Dietary fiber (g/100g) | DMSO (ppb) | DMS (ppb) | DMSO concentration / DMS concentration | Sensory inspection | | | |
|---|---|---|---|---|---|---|---|---|---|---|---|
| | | | | | | | | Dry odor | Sweet flavor | Mellow flavor | Comprehensive evaluation |
| Test Example 2 | | | | | 1 | 1 | 1.00 | 4 | 4 | 5 | 5 |
| Test Example 3 | | | | | 3 | 2 | 1.50 | 4 | 5 | 5 | 5 |
| Test Example 4 | | | | | 5 | 3 | 1.67 | 5 | 5 | 5 | 5 |
| Test Example 5 | | | | | 10 | 5 | 2.00 | 5 | 5 | 5 | 5 |
| Test Example 6 | | | | | 40 | 20 | 2.00 | 5 | 5 | 5 | 5 |
| Test Example 7 | | | | | 300 | 100 | 3.00 | 5 | 5 | 5 | 5 |
| Test Example 8 | | | | | 700 | 100 | 7.00 | 5 | 5 | 5 | 5 |
| Test Example 9 | | | | | 2000 | 200 | 10.00 | 5 | 5 | 5 | 5 |
| Test Example 10 | | | | | 5000 | 30 | 166.67 | 5 | 5 | 4 | 4 |
| Test Example 11 | | | | | 10000 | 300 | 33.33 | 5 | 5 | 5 | 5 |
| Test Example 12 | | | | | 20000 | 1000 | 20.00 | 5 | 5 | 5 | 5 |
| Test Example 13 | | | | | 30000 | 700 | 42.86 | 5 | 5 | 5 | 4 |
| Test Example 14 | | | | | 40000 | 500 | 80.00 | 5 | 4 | 5 | 3 |
| Comparative Example 4 | Green soybean | Dry powder | 1211.2 | 14.8 | 100 | 200 | 0.50 | 2 | 3 | 5 | 2 |

EP 3 824 741 B1

15

| | Powdery raw material | State | Particle size after ultrasonication d50 (μm) | Dietary fiber (g/100g) | DMSO (ppb) | DMS (ppb) | DMSO concentration / DMS concentration | Sensory inspection | | | |
|---|---|---|---|---|---|---|---|---|---|---|---|
| | | | | | | | | Dry odor | Sweet flavor | Mellow flavor | Comprehensive evaluation |
| Test Example 15 | Green soybean | Dry powder | 167.1 | 15.9 | 1 | 10 | 0.10 | 4 | 4 | 5 | 4 |
| Test Example 16 | | | | | 5 | 10 | 0.50 | 5 | 5 | 5 | 5 |
| Test Example 17 | | | | | 10 | 30 | 0.33 | 5 | 5 | 5 | 5 |
| Test Example 18 | | | | | 100 | 100 | 1.00 | 5 | 5 | 5 | 5 |
| Test Example 19 | | | | | 300 | 150 | 2.00 | 5 | 5 | 5 | 5 |
| Test Example 20 | | | | | 1000 | 300 | 3.33 | 5 | 5 | 5 | 5 |
| Test Example 21 | | | | | 3000 | 500 | 6.00 | 5 | 4 | 5 | 5 |
| Test Example 22 | | | | | 5000 | 700 | 7.14 | 5 | 5 | 5 | 5 |
| Test Example 23 | | | | | 10000 | 1000 | 10.00 | 5 | 5 | 5 | 5 |
| Test Example 24 | | | | | 20000 | 1500 | 13.33 | 5 | 5 | 5 | 5 |
| Test Example 25 | | | | | 30000 | 2000 | 15.00 | 5 | 5 | 5 | 4 |
| Test Example 26 | | | | | 40000 | 2200 | 18.18 | 5 | 4 | 5 | 3 |

EP 3 824 741 B1

16

| | Powdery raw material | State | Particle size after ultrasonication d50 (μm) | Dietary fiber (g/100g) | DMSO (ppb) | DMS (ppb) | DMSO concentration / DMS concentration | Sensory inspection | | | |
|---|---|---|---|---|---|---|---|---|---|---|---|
| | | | | | | | | Dry odor | Sweet flavor | Mellow flavor | Comprehensive evaluation |
| Test Example 27 | Beet | Dry powder | 38.5 | 10.8 | 10 | 50 | 0.20 | 5 | 5 | 5 | 4 |
| Test Example 28 | | | | | 300 | 1000 | 0.30 | 5 | 5 | 5 | 5 |
| Test Example 29 | | | | | 500 | 500 | 1.00 | 5 | 5 | 5 | 5 |
| Test Example 30 | | | | | 1200 | 300 | 4.00 | 5 | 5 | 5 | 5 |
| Test Example 31 | | | | | 2500 | 30 | 83.33 | 5 | 5 | 5 | 5 |
| Test Example 32 | | | | | 10000 | 10 | 1000.00 | 5 | 4 | 2 | 4 |
| Test Example 33 | Corn | Dry powder | 133.6 | 16.5 | 10 | 75 | 0.13 | 5 | 5 | 5 | 4 |
| Test Example 34 | | | | | 100 | 300 | 0.33 | 5 | 5 | 5 | 5 |
| Test Example 35 | | | | | 500 | 500 | 1.00 | 5 | 5 | 5 | 5 |
| Test Example 36 | | | | | 1000 | 800 | 1.25 | 5 | 5 | 5 | 5 |
| Test Example 37 | | | | | 10000 | 2000 | 5.00 | 5 | 5 | 5 | 4 |

(continued)

| | Powdery raw material | State | Particle size after ultrasonication d50 ($\mu$m) | Dietary fiber (g/100g) | DMSO (ppb) | DMS (ppb) | DMSO concentration / DMS concentration | Sensory inspection | | | |
|---|---|---|---|---|---|---|---|---|---|---|---|
| | | | | | | | | Dry odor | Sweet flavor | Mellow flavor | Comprehensive evaluation |
| Test Example 38 | Paprika | Dry powder | 191.7 | 10.0 | 1 | 100 | 0.01 | 4 | 4 | 4 | 4 |
| Test Example 39 | | | | | 10 | 100 | 0.10 | 5 | 4 | 5 | 4 |
| Test Example 40 | | | | | 30 | 100 | 0.30 | 5 | 5 | 5 | 5 |
| Test Example 41 | | | | | 80 | 100 | 0.80 | 5 | 5 | 5 | 5 |
| Test Example 42 | | | | | 150 | 100 | 1.50 | 5 | 5 | 5 | 5 |
| Test Example 43 | Pumpkin | Dry powder | 18.97 | 10.8 | 100 | 1 | 100.00 | 5 | 5 | 5 | 5 |
| Test Example 44 | | | | | 1000 | 3 | 333.33 | 5 | 5 | 3 | 4 |
| Test Example 45 | | | | | 10000 | 5 | 2000.00 | 5 | 4 | 2 | 4 |
| Test Example 46 | Macadamia nut | Dry powder | 24.36 | 6.5 | 30 | 10 | 3.00 | 5 | 5 | 5 | 5 |
| Test Example 47 | | | | | 200 | 30 | 6.67 | 5 | 5 | 5 | 5 |
| ND: Less than 1 ppb | | | | | | | | | | | |

EP 3 824 741 B1

[Table 3]

| | Powdery raw material | State | Particle size after ultrasonication | Dietary fiber | DMSO | DMS | DMSO concentration / DMS concentration | Peak area ratio of confirmation ions by FE-DHS-two-dimensional GCMS method (DMSO/DMS) | Sensory inspection | | | | |
|---|---|---|---|---|---|---|---|---|---|---|---|---|---|
| | | | d50(μm) | (g/100g) | (ppb) | (ppb) | | | Dry odor | Sweet flavor | Mellow flavor | Comprehensive evaluation | |
| Test Example 48 | Green pea | Dry powder | 566.5 | 13.1 | 2000 | 100 | 20.00 | 9.8 | 5 | 5 | 5 | 5 | Scent of DMS is not felt. |
| Test Example 49 | | | | | 1400 | 200 | 7.00 | 7.5 | 5 | 5 | 5 | 5 | Scent of DMS is not felt. |
| Test Example 50 | | | | | 499 | 100 | 4.99 | 5.3 | 5 | 5 | 5 | 5 | Scent of DMS is not felt. |
| Test Example 51 | | | | | 197 | 60 | 3.28 | 2.1 | 5 | 5 | 5 | 5 | Scent of DMS is not felt. |
| Test Example 52 | | | | | 26 | 20 | 1.30 | 0.8 | 5 | 5 | 5 | 5 | Scent of DMS is not felt. |
| Test Example 53 | | | | | 34 | 62 | 0.55 | 0.5 | 5 | 5 | 5 | 5 | Scent of DMS is not felt. |
| Test Example 54 | | | | | 30 | 138 | 0.22 | 0.3 | 5 | 5 | 5 | 4 | Scent of DMS is slightly felt. |
| Test Example 55 | | | | | 10 | 150 | 0.07 | 0.1 | 5 | 5 | 5 | 4 | Scent of DMS is somewhat felt. |

EP 3 824 741 B1

(continued)

| Powdery raw material | State | Particle size after ultrasonication d50(μm) | Dietary fiber (g/100g) | DMSO (ppb) | DMS (ppb) | DMSO concentration / DMS concentration | Peak area ratio of confirmation ions by FE-DHS-two-dimensional GCMS method (DMSO/DMS) | Sensory inspection | | | | | |
|---|---|---|---|---|---|---|---|---|---|---|---|---|---|
| | | | | | | | | Dry odor | Sweet flavor | Mellow flavor | Comprehensive evaluation | | |
| Example 56 | Corn | Dry powder | 150.8 | 31.5 | 300 | 300 | 1.00 | 1.0 | 5 | 5 | 5 | 5 | Scent of DMS is not felt. |
| Example 57 | Green soybean | Dry powder | 17.33 | 52.5 | 600 | 140 | 4.29 | 5.1 | 5 | 5 | 5 | 5 | Scent of DMS is not felt. |
| Example 58 | Soybean | Dry powder | 204.4 | 72.3 | 1000 | 140 | 7.14 | 8.9 | 5 | 5 | 5 | 5 | Scent of DMS is not felt. |

[Table 4]

| | Powdery raw material | State of food or drink | Particle size after ultrasonication d50 ($\mu$m) | Dietary fiber (g/100g) | DMSO (ppb) | DMS (ppb) | DMSO concentration / DMS concentration | Peak area ratio of confirmation ions by FE-DHS-two-dimensional GCMS method (DMSO/DMS) | Sensory inspection | | | | |
|---|---|---|---|---|---|---|---|---|---|---|---|---|---|
| | | | | | | | | | Dry odor | Sweet flavor | Mellow flavor | Comprehensive evaluation | |
| Test Example 59 | Green soybean | Paste | 70.3 | 19.1 | 500 | 50 | 10.00 | 9.3 | 5 | 5 | 5 | 5 | Scent of DMS is not felt. |
| Test Example 60 | Green soybean | Smoothie | 98.44 | 5.0 | 100 | 18 | 5.56 | 8.0 | 5 | 5 | 5 | 5 | Scent of DMS is not felt. |

The result revealed that in various dried plant powders having a dietary fiber content at predetermined proportions or more, adjusting the dimethyl sulfoxide content, the dimethyl sulfide content and the d50 of particle size after ultrasonication in predetermined ranges served to exerting the effect of the present invention of suppressing dry odor and enhancing sweet flavor. Further, it was demonstrated that it was more preferable to adjust the peak area ratio of confirmation ions (DMSO: 78, DMS: 62), (DMSO/DMS) by FE-DHS-two-dimensional GCMS method to a predetermined proportion because DMSO's effect to negate the scent of DMS enhanced the gorgeous scent or rich flavor of a plant.

**Claims**

1. A dried plant powder satisfying requirements (1) to (5) :

> (1) a dietary fiber content is 5 mass% or more in terms of dry weight;
> (2) a dimethyl sulfoxide content is 1 ppb or more and 40,000 ppb or less;
> (3) d50 of particle size after ultrasonication is 1,000 μm or less; whereby the d50 of particle size of the dried plant powder is defined as the particle size at which the ratio of the proportion of the cumulative value of particle frequency % on the large side to the proportion of the cumulative value of particle frequency % on the small side is 50:50 when the particle size distribution of the dried plant powder is divided into two from a certain particle size, and the term particle size refers to that measured on a volume basis;
> (4) a dimethyl sulfide content is 1 ppb or more and 2,000 ppb or less; and
> (5) a ratio of dimethyl sulfoxide content to dimethyl sulfide content is 0.001 or more and 180 or less.

2. The dried plant powder according to claim 1, further satisfying requirement (6):
(6) a peak area ratio of confirmation ions of dimethyl sulfoxide and dimethyl sulfide (dimethyl sulfoxide: 78, dimethyl sulfide: 62) extracted in 5 mass% aqueous solution and thoroughly volatilized is 0.1 or more and less than 10 by two-dimensional gas chromatography analysis using full evaporation-dynamic headspace-gas chromatography-mass spectrometry.

3. The dried plant powder according to claim 1 or 2, wherein the dried plant is one or more selected from the group consisting of a grain, a potato, a pulse, a nut, a vegetable, a fruit, and a mushroom.

4. The dried plant powder according to any one of Claims 1 to 3, wherein the dried plant is one or more selected from the group consisting of a grain, a potato, a pulse, a nut, and a vegetable.

5. The dried plant powder according to any one of claims 1 to 4, wherein the dried plant is one or more selected from the group consisting of paprika, beet, soybean, corn, carrot, pumpkin, pea, broad bean, sweet potato, broccoli, spinach, tomato, and kale.

6. A food or drink comprising the dried plant powder according to any one of claims 1 to 5.

7. A method for manufacturing a dried plant powder having a d50 after ultrasonication of 1,000 μm or less, the method comprising crushing a dried plant having a dietary fiber content of 5 mass% or more in terms of dry weight, and adding dimethyl sulfoxide and dimethyl sulfide such that a content of dimethyl sulfoxide is 1 ppb or more and 40,000 ppb or less, a content of dimethyl sulfide is 1 ppb or more and 2,000 ppb or less, and a ratio of the dimethyl sulfoxide content to the dimethyl sulfide content is 0.001 or more and 180 or less , whereby the d50 of particle size of the dried plant powder is defined as the particle size at which the ratio of the proportion of the cumulative value of particle frequency % on the large side to the proportion of the cumulative value of particle frequency % on the small side is 50:50 when the particle size distribution of the dried plant powder is divided into two from a certain particle size, and the term particle size refers to that measured on a volume basis.

8. The method according to claim 7, wherein the dried plant powder is adjusted such that a peak area ratio of confirmation ions of dimethyl sulfoxide and dimethyl sulfide (dimethyl sulfoxide: 78, dimethyl sulfide: 62) extracted in 5 mass% aqueous solution and thoroughly volatilized is 0.1 or more and less than 10 by two-dimensional gas chromatography analysis using full evaporation-dynamic headspace-gas chromatography-mass spectrometry.

9. Use of a dried plant powder having a d50 after ultrasonication of 1,000 μm or less for enhancing sweet flavor, comprising adding dimethyl sulfoxide and dimethyl sulfide to a crushed dried plant having a dietary fiber content of 5 mass% or more in terms of dry weight such that a content of dimethyl sulfoxide is 1 ppb or more and 40,000 ppb or less, a content of dimethyl sulfide is 1 ppb or more and 2,000 ppb or less, and a ratio of the dimethyl sulfoxide content to the dimethyl sulfide content is 0.001 or more and 180 or less , whereby the d50 of particle size of the dried plant powder is defined as the particle size at which the ratio of the proportion of the cumulative value of particle frequency % on the large side to the proportion of the cumulative value of particle frequency % on the small side is 50:50 when the particle size distribution of the dried plant powder is divided into two from a certain particle size, and the term particle size refers to that measured on a volume basis.

10. The use according to claim 9, wherein the dried plant powder is adjusted such that a peak area ratio of confirmation ions of dimethyl sulfoxide and dimethyl sulfide (dimethyl sulfoxide: 78, dimethyl sulfide: 62) extracted in 5 mass% aqueous solution and thoroughly volatilized is 0.1 or more and less than 10 by two-dimensional gas chromatography analysis using full evaporation-dynamic headspace-gas chromatography-mass spectrometry.

**Patentansprüche**

1. Pulver einer getrockneten Pflanze, das die Anforderungen (1) bis (5) erfüllt:

(1) der Ballaststoff-Gehalt beträgt 5 Massen-% oder mehr, bezogen auf das Trockengewicht;
(2) der Dimethylsulfoxid-Gehalt beträgt 1 ppb oder mehr und 40.000 ppb oder weniger;
(3) der d50 der Teilchengröße beträgt nach einer Ultraschallbehandlung 1.000 $\mu$m oder weniger; wobei der d50 der Teilchengröße des Pulvers der getrockneten Pflanze als Teilchengröße definiert ist, bei der das Verhältnis zwischen dem Anteil des kumulativen Werts der prozentuellen Teilchenhäufigkeit auf der großen Seite und dem Anteil des kumulativen Werts der prozentuellen Teilchengröße auf der kleinen Seite 50:50 beträgt, wenn die Teilchengrößenverteilung des Pulvers der getrockneten Pflanze ab einer bestimmten Teilchengröße durch zwei geteilt wird, wobei sich der Begriff Teilchengröße auf die auf Volumenbasis gemessene bezieht;
(4) der Dimethylsulfid-Gehalt beträgt 1 ppb oder mehr und 2.000 ppb oder weniger; und
(5) das Verhältnis zwischen dem Dimethylsulfoxid-Gehalt und dem Dimethylsulfid-Gehalt beträgt 0,001 oder mehr und 180 oder weniger.

2. Pulver einer getrockneten Pflanze nach Anspruch 1, das außerdem die Anforderung (6) erfüllt:
(6) das Peakflächenverhältnis zwischen Bestätigungsionen von Dimethylsulfoxid und von Dimethylsulfid (Dimethylsulfoxid: 78, Dimethylsulfid: 62), die jeweils in eine 5-massen-%ige wässrige Lösung extrahiert und gründlich verdampft wurden, beträgt bei einer zweidimensionalen Gaschromatographie-Analyse unter Anwendung von Full-Evaporation-Dynamic-Headspace-Gaschromatographie-Massenspektrometrie 0,1 oder mehr und weniger als 10.

3. Pulver einer getrockneten Pflanze nach einem der Ansprüche 1 oder 2, wobei die getrocknete Pflanze eine oder mehrere, ausgewählt aus der aus einem Getreide, einer Kartoffel, einer Hülsenfrucht, einer Nuss, einem Gemüse, einer Frucht und einem Pilz bestehenden Gruppe ist/sind.

4. Pulver einer getrockneten Pflanze nach einem der Ansprüche 1 bis 3, wobei die getrocknete Pflanze eine oder mehrere, ausgewählt aus der aus einem Getreide, einer Kartoffel, einer Hülsenfrucht, einer Nuss und einem Gemüse bestehenden Gruppe ist/sind.

5. Pulver einer getrockneten Pflanze nach einem der Ansprüche 1 bis 4, wobei die getrocknete Pflanze eine oder mehrere, ausgewählt aus der aus Paprika, Rübe, Sojabohne, Mais, Karotte, Kürbis, Erbse, Ackerbohne, Süßkartoffel, Brokkoli, Spinat, Tomate und Grünkohl bestehenden Gruppe ist/sind.

6. Speise oder Getränk, die/das ein Pulver einer getrockneten Pflanze nach einem der Ansprüche 1 bis 5 umfasst.

7. Verfahren zur Herstellung eines Pulvers einer getrockneten Pflanze mit einem d50 nach Ultraschallbehandlung von 1.000 $\mu$m oder weniger, wobei das Verfahren das Mahlen einer getrockneten Pflanze mit einem Ballaststoffgehalt von 5 Massen-% oder mehr, bezogen auf das Trockengewicht, und das Hinzufügen von Dimethylsulfoxid und Dimethylsulfid auf solche Weise umfasst, dass der Dimethylsulfoxid-Gehalt 1 ppb oder mehr und 40.000 ppb oder weniger beträgt, der Dimethylsulfid-Gehalt 1 ppb oder mehr und 2.000 ppb oder weniger beträgt und das Verhältnis zwischen dem Dimethylsulfoxid-Gehalt und dem Dimethylsulfid-Gehalt 0,001 oder mehr und 180 oder weniger beträgt, wobei der d50 der Teilchengröße des Pulvers der getrockneten Pflanze als Teilchengröße definiert ist, bei der das Verhältnis zwischen dem Anteil des kumulativen Werts der prozentuellen Teilchenhäufigkeit auf der großen Seite und dem Anteil des kumulativen Werts der prozentuellen Teilchengröße auf der kleinen Seite 50:50 beträgt, wenn die Teilchengrößenverteilung des Pulvers der getrockneten Pflanze ab einer bestimmten Teilchengröße durch zwei geteilt wird, wobei sich der Begriff Teilchengröße auf die auf Volumenbasis gemessene bezieht;

8. Verfahren nach Anspruch 7, wobei das Pulver der getrockneten Pflanze so abgestimmt wird, dass das Peakflächenverhältnis zwischen Bestätigungsionen von Dimethylsulfoxid und von Dimethylsulfid (Dimethylsulfoxid: 78, Dimethylsulfid: 62), die jeweils in eine 5-massen-%ige wässrige Lösung extrahiert und gründlich verdampft wurden, bei einer zweidimensionalen Gaschromatographie-Analyse unter Anwendung von Full-Evaporation-Dynamic-Headspace-Gaschromatographie-Massenspektrometrie 0,1 oder mehr und weniger als 10 beträgt.

9. Verwendung eines Pulvers einer getrockneten Pflanze mit einem d50 nach Ultraschallbehandlung von 1.000 $\mu$m oder weniger zur Verstärkung eines süßen Geschmacks, die das Hinzufügen von Dimethylsulfoxid und Dimethylsulfid zu einer gemahlenen getrockneten Pflanze mit einem Ballaststoff-Gehalt von 5 Massen-% oder mehr, bezogen auf das Trockengewicht auf solche Weise umfasst, dass der Dimethylsulfoxid-Gehalt 1 ppb oder mehr und 40.000 ppb oder weniger beträgt, der Dimethylsulfid-Gehalt 1 ppb oder mehr und 2.000 ppb oder weniger beträgt und das Verhältnis zwischen dem Dimethylsulfoxid-Gehalt und dem Dimethylsulfid-Gehalt 0,001 oder mehr und 180 oder weniger beträgt, wobei der d50 der Teilchengröße des Pulvers der getrockneten Pflanze als Teilchengröße definiert ist, bei der das Verhältnis zwischen dem Anteil des kumulativen Werts der prozentuellen Teilchenhäufigkeit auf der großen Seite und dem Anteil des kumulativen Werts der prozentuellen Teilchengröße auf der kleinen Seite 50:50 beträgt, wenn die Teilchengrößenverteilung des Pulvers der getrockneten Pflanze ab einer bestimmten Teilchengröße durch zwei geteilt wird, wobei sich der Begriff Teilchengröße auf die auf Volumenbasis gemessene bezieht.

10. Verwendung nach Anspruch 9, wobei das Pulver der getrockneten Pflanze so abgestimmt ist, dass das Peakflächenverhältnis zwischen Bestätigungsionen von Dimethylsulfoxid und von Dimethylsulfid (Dimethylsulfoxid: 78, Dimethylsulfid: 62), die jeweils in eine 5-massen-%ige wässrige Lösung extrahiert und gründlich verdampft wurden, bei einer zweidimensionalen Gaschromatographie-Analyse unter Anwendung von Full-Evaporation-Dynamic-Headspace-Gaschromatographie-Massenspektrometrie 0,1 oder mehr und weniger als 10 beträgt.

**Revendications**

1. Poudre de plante séchée répondant aux exigences (1) à (5) :

    (1) une teneur en fibres alimentaires est de 5 % en masse ou plus en termes de poids sec ;
    (2) une teneur en diméthylsulfoxyde égale ou supérieure à 1 ppb et inférieure ou égale à 40 000 ppb ;
    (3) un d50 de taille de particule après ultrasonication est de 1 000 $\mu$m ou moins ; moyennant quoi le d50 de taille de particule de la poudre de plante séchée est défini comme la taille de particule à laquelle le rapport de la proportion de la valeur cumulée de % de fréquence de particule sur le grand côté à la proportion de la valeur cumulée de % de fréquence de particule sur le petit côté est de 50:50 lorsque la distribution de taille de particule de la poudre de plante séchée est divisée en deux à partir d'une certaine taille de particule, et l'expression taille de particule fait référence à celle mesurée sur une base de volume ;
    (4) une teneur en diméthylsulfure égale ou supérieure à 1 ppb et inférieure ou égale à 2 000 ppb ; et
    (5) le rapport entre la teneur en diméthylsulfoxyde et la teneur en diméthylsulfure est supérieur ou égal à 0,001 et inférieur ou égal à 180.

2. Poudre de plante séchée selon la revendication 1, satisfaisant en outre à l'exigence (6) :
    (6) un rapport de surface de crête d'ions de confirmation du diméthylsulfoxyde et de diméthylsulfure (diméthylsulfoxyde : 78, diméthylsulfure : 62) extraits dans une solution aqueuse à 5% en masse et complètement volatilisée est de 0,1 ou plus et de moins de 10 par analyse de chromatographie en phase gazeuse bidimensionnelle en utilisant la chromatographie en phase gazeuse par évaporation complète-espace de tête dynamique-chromatographie en phase gazeuse-spectrométrie de masse.

3. Poudre de plante séchée selon la revendication 1 ou 2, dans laquelle la plante séchée est une ou plusieurs choisies dans le groupe constitué d'une graine, d'une pomme de terre, d'une légumineuse, d'une noix, d'un légume, d'un fruit et d'un champignon.

4. Poudre de plante séchée selon l'une quelconque des revendications 1 à 3, dans laquelle la plante séchée est une ou plusieurs choisies dans le groupe constitué d'une graine, d'une pomme de terre, d'une légumineuse, d'une noix et d'un légume.

**5.** Poudre de plante séchée selon l'une quelconque des revendications 1 à 4, dans laquelle la plante séchée est choisie dans le groupe comprenant paprika, betterave, soja, maïs, carotte, citrouille, pois, fève, patate douce, brocoli, épinard, tomate et chou frisé.

**6.** Aliment ou boisson comprenant la poudre de plante séchée selon l'une quelconque des revendications 1 à 5.

**7.** Procédé de fabrication d'une poudre de plante séchée ayant un d50 après ultrasonication de 1 000 µm ou moins, le procédé comprenant le broyage d'une plante séchée ayant une teneur en fibres alimentaires de 5 % en masse ou plus en termes de poids sec, et l'addition de diméthylsulfoxyde et de diméthylsulfure de telle sorte qu'une teneur en diméthylsulfoxyde soit de 1 ppb ou plus et de 40 000 ppb ou moins, une teneur en diméthylsulfure soit de 1 ppb ou plus et de 2 000 ppb ou moins, et un rapport de la teneur en diméthylsulfoxyde à la teneur en diméthylsulfure soit de 0,001 ou plus et de 180 ou moins, moyennant quoi le d50 de la taille de particule de la poudre de plante séchée étant défini comme étant la taille de particule à laquelle le rapport de la proportion de la valeur cumulée de % de fréquence de particule sur le grand côté à la proportion de la valeur cumulée de % de fréquence de particule sur le petit côté est de 50:50 lorsque la distribution de taille de particule de la poudre de plante séchée est divisée en deux à partir d'une certaine taille de particule, et l'expression taille de particule fait référence à celle mesurée sur une base de volume.

**8.** Procédé selon la revendication 7, dans lequel la poudre de plante séchée est ajustée de telle sorte qu'un rapport de surface de crête d'ions de confirmation de diméthylsulfoxyde et de diméthylsulfure (diméthylsulfoxyde : 78, sulfure de diméthyle : 62) extraits dans une solution aqueuse à 5 % en masse et complètement volatilisée est de 0,1 ou plus et de moins de 10 par analyse de chromatographie en phase gazeuse bidimensionnelle en utilisant la chromatographie en phase gazeuse par évaporation complète-espace de tête dynamique-chromatographie en phase gazeuse-spectrométrie de masse.

**9.** Utilisation d'une poudre de plante séchée ayant un d50 après ultrasonication de 1 000 µm ou moins pour améliorer un arôme sucré, comprenant l'addition de diméthylsulfoxyde et de diméthylsulfure à une plante séchée broyée ayant une teneur en fibres alimentaires de 5 % en masse ou plus en termes de poids sec de telle sorte qu'une teneur en diméthylsulfoxyde soit de 1 ppb ou plus et de 40 000 ppb ou moins, une teneur en diméthylsulfure soit de 1 ppb ou plus et de 2 000 ppb ou moins, et un rapport de la teneur en diméthylsulfoxyde à la teneur en diméthylsulfure soit de 0,001 ou plus et de 180 ou moins, moyennant quoi le d50 de la taille de particule de la poudre de plante séchée étant défini comme étant la taille de particule à laquelle le rapport de la proportion de la valeur cumulée de % de fréquence de particule sur le grand côté à la proportion de la valeur cumulée de % de fréquence de particule sur le petit côté est de 50:50 lorsque la distribution de taille de particule de la poudre de plante séchée est divisée en deux à partir d'une certaine taille de particule, et l'expression taille de particule fait référence à celle mesurée sur une base de volume.

**10.** Utilisation selon la revendication 9, dans laquelle la poudre de plante séchée est ajustée de telle sorte qu'un rapport de surface de crête d'ions de confirmation de diméthylsulfoxyde et de diméthylsulfure (diméthylsulfoxyde : 78, diméthylsulfure : 62) extraits dans une solution aqueuse à 5 % en masse et complètement volatilisée soit de 0,1 ou plus et de moins de 10 par analyse de chromatographie en phase gazeuse bidimensionnelle en utilisant la chromatographie en phase gazeuse par évaporation complète-espace de tête dynamique-chromatographie en phase gazeuse-spectrométrie de masse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2008182006 A
- JP HEI07298849 A
- WO 9956566 A
- JP 2009142244 A

**Non-patent literature cited in the description**

- Standard Tables of Food Composition in Japan. Ministry of Health, Labor and Welfare, 2015, 236
- *Standard Tables of Food Composition in Japan,* 2015
- *CHEMICAL ABSTRACTS,* 67-68-5
- *CHEMICAL ABSTRACTS,* 75-18-3